(19) Europäisches Patentamt / European Patent Office / Office européen des brevets

(11) **EP 1 798 493 A2**

(12) **EUROPEAN PATENT APPLICATION**

(43) Date of publication:
**20.06.2007 Bulletin 2007/25**

(51) Int Cl.:
***F24F 3/16*** (2006.01)

(21) Application number: **06025853.0**

(22) Date of filing: **13.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **15.12.2005 JP 2005361929**

(71) Applicant: **SANYO ELECTRIC CO., LTD.**
**Moriguchi-shi, Osaka 570-8686 (JP)**

(72) Inventors:
- **Takahashi, Kazuo**
  **Ota-shi,Gunma 373-0036 (JP)**
- **Dobashi, Mitsuhiro**
  **Kumagaya-shi,**
  **Saitama 360-0033 (JP)**
- **Kobayashi,Masanori**
  **Ashikaga-shi,**
  **Tochigi 326-0051 (JP)**

- **Ohashi, Eiji**
  **Ora-gun,**
  **Gunma 370-0514 (JP)**
- **Yamamoto, Tetsuya**
  **Ota-shi,**
  **Gunma 373-0806 (JP)**
- **Rakuma, Tsuyoshi**
  **Ora-gun,**
  **Gunma 370-0524 (JP)**
- **Suzuki, Daisuke**
  **Ota-shi,**
  **Gunma 373-0817 (JP)**
- **Motegi, Masayuki**
  **Ora-gun,**
  **Gunma 370-0601 (JP)**
- **Kurokawa, Keiko**
  **Ora-gun,**
  **Gunma 370-0517 (JP)**

(74) Representative: **Glawe, Delfs, Moll**
**Patentanwälte**
**Postfach 26 01 62**
**D-80058 München (DE)**

(54) **Air filtering apparatus**

(57) A air filtering apparatus for filtering microorganisms such as virus, bacteria, fungus, etc. contained in air including a mechanism for blowing air to a gas-liquid contact member (5) to or into which electrolytic water achieved by electrolyzing water containing chlorine ions is dropped or infiltrated so that the air is brought into contact with the electrolytic water, and blowing out the filtered air to a room, and a predicting unit (32, 33, 30) for judging pollution of the electrolytic water and predicting adherence of scale to the gas-liquid contact member (5) .

FIG.5A

EP 1 798 493 A2

**Description**

BACKGROUND OF THE INVENTION

1. Field of the Invention

The present invention relates to an air filtering apparatus that can remove microorganisms such as bacteria, virus, etc. floating on air.

2. Description of the Related Art

There is also known a sterilizing apparatus for diffusing electrolytic water mist into air and bringing the electrolytic water mist into direct contact with microorganisms floating on air to inactivate virus, etc., thereby removing the microorganisms such as virus, etc. (JP-A-2002-181358).

The sterilizing apparatus described above becomes operative under such a use environment that particulate electrolytic water mist easily reach microorganisms, that is, in a relatively small space, however, it hardly becomes operative under such a use environment that the electrolytic water mist hardly reach microorganisms, that is, in a relatively large space such as a kindergarten, an elementary/junior high/ high school, long-term care insurance facilities, a hospital or the like.

Furthermore, there has been also proposed a mechanism of electrolyzing water containing chlorine ions to achieve electrolytic water, dropping/infiltrating the electrolytic water to/into a gas-liquid contact member while blowing indoor air to the gas-liquid contact member, thereby bringing the indoor air into contact with the electrolytic air, and then blowing out the air to the room.

In this case, when scale occurs in the electrolytic water and deposits on the gas-liquid contact member, it is cumbersome to remove the scale.

SUMMARY OF THE INVENTION

The present invention has been implemented in view of the foregoing problem, and has an object to provide an air filtering apparatus that can simply know whether scale is contained in electrolytic water before the scale adheres to a gas-liquid contact member.

In order to attain the above object, according to a first aspect of the present invention, there is provided air filtering apparatus for filtering microorganisms such as virus, bacteria, fungus, etc. contained in air, characterized by comprising: a mechanism for blowing air to a gas-liquid contact member (5) to or into which electrolytic water achieved by electrolyzing water containing chlorine ions is dropped or infiltrated so that the air is brought into contact with the electrolytic water, and blowing out the filtered air to a room; and a predicting unit (32, 33, 30) for judging pollution of the electrolytic water and predicting adherence of scale to the gas-liquid contact member (5).

In the above air filtering apparatus, the predicting unit may include an electronic conductivity detecting unit (32, 33) for detecting the electric conductivity of the electrolytic water, and judges the pollution of the electrolytic water on the basis of the electric conductivity detected by the electric conductivity detecting unit.

In the above air filtering apparatus, the electric conductivity detecting unit may include electrodes (32, 33) for electrolyzing water to generate the electrolytic water, the electric conductivity of the electrolytic water being detected by the electrodes.

The above air filtering apparatus may further comprises a warning unit (L) for warning adherence of scale when the predicting unit predicts adherence of scale.

In the air filtering apparatus, the electrolytic water may contain active oxygen specifies achieved by electrolyzing tap water, and the active oxygen species may contain at least one material selected from the group consisting of hypochlorous acid, ozone and hydrogen peroxide.

In the above air filtering apparatus, the polarities of the electrodes maybe inverted periodically or irregularly under a predetermined condition.

According to a second aspect of the present invention, there is provided an air filtering apparatus for filtering microorganisms such as virus, bacteria, fungus, etc. contained in air comprises a mechanism for blowing air to a gas-liquid contact member (5) to or into which electrolytic water achieved by electrolyzing water containing chlorine ions is dropped or infiltrated so that the air is brought into contact with the electrolytic water, and blowing out the filtered air to a room, and an electronic conductivity detecting unit (32, 33) for detecting the electric conductivity of the electrolytic water, wherein a condition for electrolyzing electrolytic water and achieving electrolytic water having a required concentration is determined on the basis of the electric conductivity detected by the electric conductivity detecting unit, and the electrolytic water is electrolyzed under the condition.

According to a third aspect of the present invention, there is provided an air filtering apparatus for filtering microorganisms such as virus, bacteria, fungus, etc. contained in air, characterized by comprising a mechanism for blowing air to a gas-liquid contact member (5) to or into which electrolytic water achieved by electrolyzing water containing chlorine ions is dropped or infiltrated so that the air is brought into contact with the electrolytic water, and blowing out the filtered indoor air to a room, wherein the mechanism has an internal filtering mode in which when the stop time of the electrolysis is longer than a predetermined time, the electrolysis of the electrolytic water is started to prevent deterioration of water quality.

In the above air filtering apparatus, the mechanism may have an operation start-up mode in which when the operation based on the internal filtering mode is executed and then an operation switch for the apparatus is turned on, prior to a stationary operation, electrolysis is executed to supplement active oxygen specifies whose residual concentration is lowered during the stop time, in accordance with the electric conductivity of the electrolytic water and the stop time of the electrolysis.

According to a fourth aspect of the present invention, there is provided an air filtering apparatus for filtering microorganisms such as virus, bacteria, fungus, etc. contained in air comprises a mechanism for blowing air to a gas-liquid contact member to or into which electrolytic water achieved by electrolyzing water containing chlorine ions is dropped or infiltrated so that the air is brought into contact with the electrolytic water, and blowing out the filtered indoor air to a room, and an electronic conductivity detecting unit for detecting the electric conductivity of the electrolytic water, wherein when an operation switch for the apparatus is turned on, prior to a stationary operation, electrolysis is executed to supplement active oxygen specifies whose residual concentration is lowered during the stop time, in accordance with the electric conductivity of the electrolytic water and the stop time of the electrolysis.

According to the present invention, the predicting unit for predicting adherence of scale to the gas-liquid contact member by judging the pollution of the electrolytic water is provided. Therefore, before scale actually adheres to the gas-liquid contact member, a user can simply known the scale is contained in the electrolytic water.

## BRIEF DESCRIPTION FO THE DRAWINGS

Fig. 1 is a perspective view showing an embodiment of a floor-mount type air filtering apparatus of the present invention;
Fig. 2 is a perspective view showing the internal construction of the floor-mount type air filtering apparatus of Fig. 1;
Fig. 3 is a longitudinally-sectional view of a housing;
Fig. 4 is a front view showing a gas-liquid contact member;
Figs. 5A to 5C are a systematic diagram showing a unit for dropping electrolytic water to the gas-liquid contact member, wherein Fig. 5A is a side view, Fig. 5B is a cross-sectional view of a spray box, and Fig. 5C is a diagram showing the construction of an electrolytic bath;

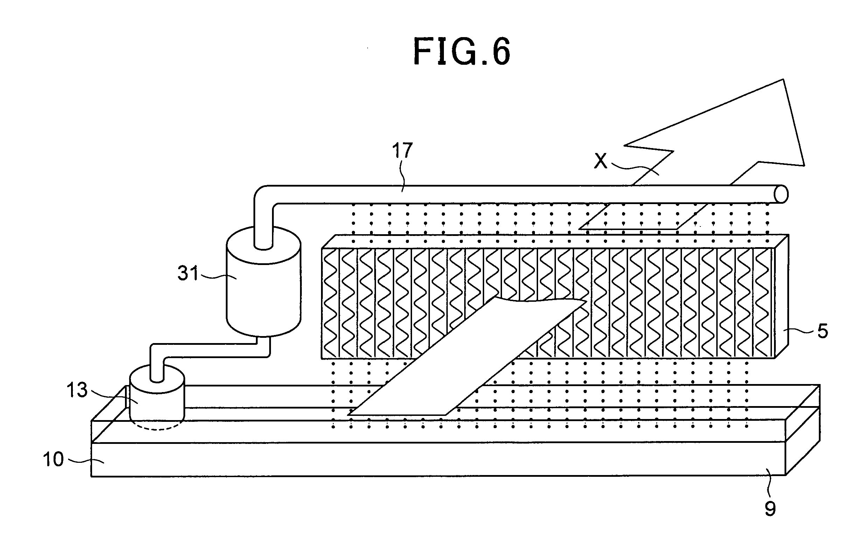

Fig. 6 is a diagram showing air purification;
Fig. 7 is a flowchart showing a prediction processing of predicting adherence of scale;
Fig. 8 is a flowchart showing the processing in an internal filtering mode;
Fig. 9 is a flowchart showing the processing in a start-up mode;
Fig. 10 is a flowchart showing electrolysis operation processing;
Fig. 11 is a flowchart showing measuring operation processing in an electric conductivity measuring mode; and
Fig. 12 is a flowchart showing the processing in a stationary driving mode.

## DETAILED DESCRIPTION OF THE PREFERRED EMBODIMENTS

Preferred embodiments according to the present invention will be described hereunder with reference to the accompanying drawings.

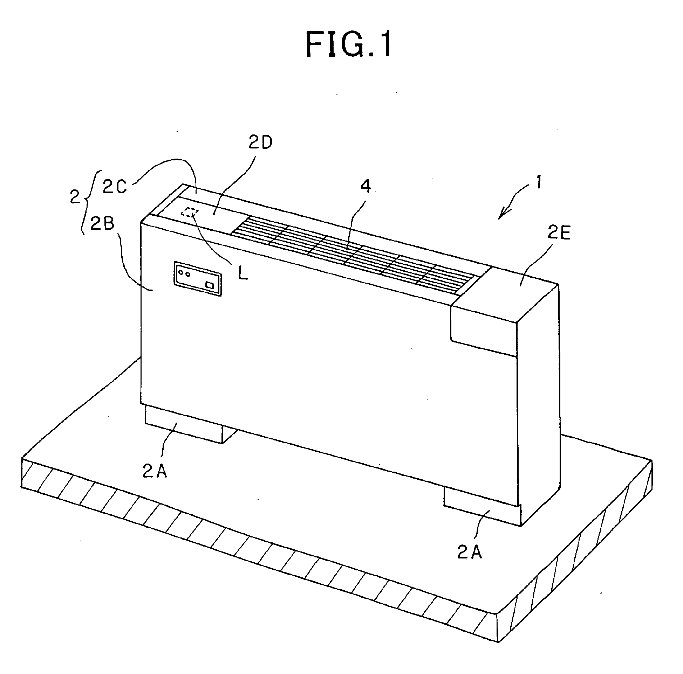

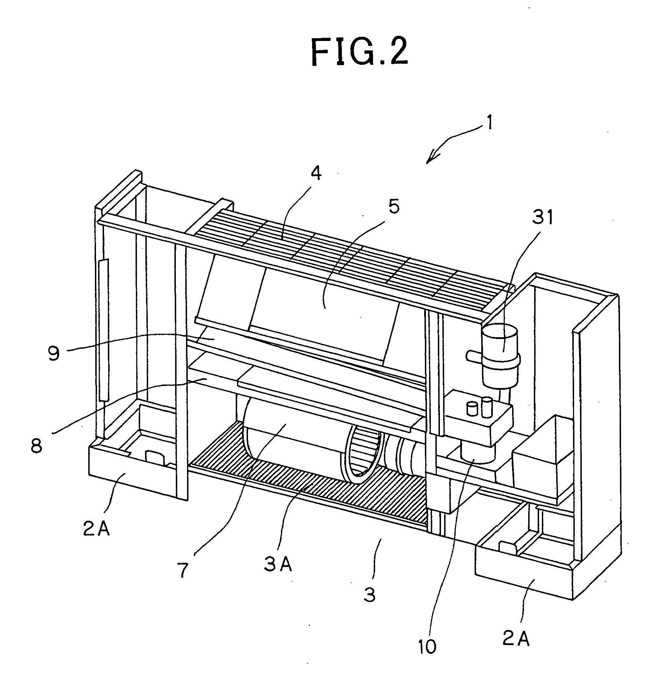

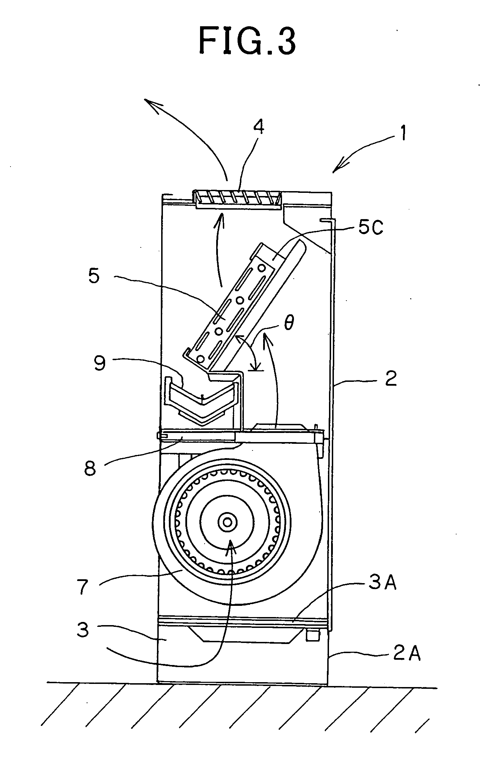

In Fig. 1, reference numeral 1 represents a floor-mount type air filtering apparatus. The floor-mount type air filtering apparatus 1 has a box-type housing 2, and the housing 2 includes leg pieces 2A, a front panel 2B and a top panel 2C. An operation lid 2D and an opening/closing lid 2E are disposed in juxtaposition with each other. Furthermore, a laterally elongated air suction port 3 is formed at the lower portion of the housing 2 as shown in Fig. 2, and a pre-filter 3A is disposed above the air suction port 3. An air blowing fan 7 is disposed above the pre-filter 3A, and a gas-liquid contact member 5 having high water retentivity is disposed like a diagonal bracing (i.e., disposed on the lean) above the air blowing fan 7 as shown in Fig. 3. Furthermore, a laterally-elongated air blow-out port 4 is disposed above the gas-liquid contact member 5. Reference numeral 8 represents a support plate for the air blowing fan 7, and the support plate 8 is supported by the housing 2.

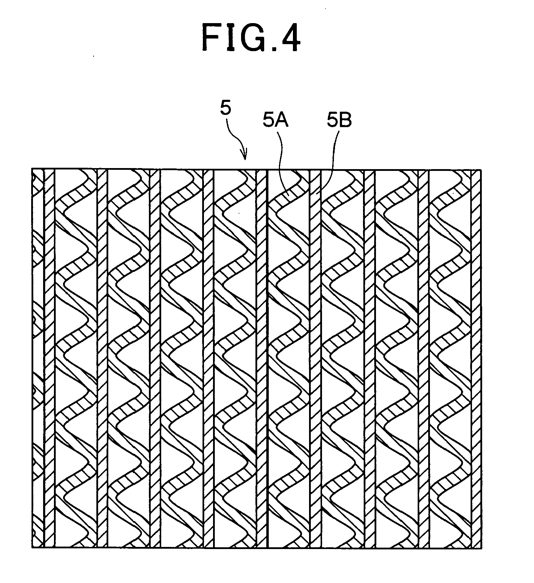

The gas-liquid contact member 5 is a filter member having a honeycomb structure, and it is designed so that the broad gas contact area can be secured, electrolytic water can be dropped through it and also it is hardly clogged. That is, as shown in Fig. 4, the gas-liquid contact member 5 comprises corrugated members 5A and flat-plate type members 5B that are joined to one another, whereby the gas-liquid contact member 5 is designed in a honeycomb structure as a whole. The members 5A and 5B are formed of materials having little reactivity to electrolytic water as described later, that is, materials that are not deteriorated by the electrolytic water, for example, they are formed of polyolefin type resin (polyethylene resin, polypropylene resin or the like), PET (polyethylene-terephthalate) resin, vinyl chloride resin, fluorinated resin (PTFE, PFA, ETFE or the like), cellulose type material, ceramics type material or the like. In this embodiment, PET resin is used for the members 5A and 5B.

The gas-liquid contact member 5 may be subjected to a hydrophilic treatment to increase of the affinity to electrolytic water. Accordingly, the water retentivity (wettability) of the electrolytic water of the gas-liquid contact member 5 can be kept excellent, and the contact between active oxygen species and indoor air can be continued for a long time. Furthermore, electrolytic water having a mildewproof action is dropped to or infiltrated into the gas-liquid contact member 5, so that it is unnecessary to coat mildew-resistant agent on the gas-liquid contact member 5 as a countermeasure of proofing mildew.

The inclination (tilt) angle $\theta$ of the gas-liquid contact member 5 shown in Fig. 3 is preferably set to 30° or more. If the inclination angle is less than 30°, the dropped electrolytic water does not flow along the slope of the gas-liquid contact member 5, but falls downwardly. Furthermore, if the inclination angle approaches to 90°, the flowing direction of air passing through the gas-liquid contact member 5 is substantially horizontal and thus it is difficult to blow the air upwardly. When the blow-out direction of the air is approached to the horizontal direction, it is impossible to blow the air far away. In this case, the air filtering apparatus is not suitable to sterilize air in a large space. It is preferable that the inclination angle $\theta$ satisfies the condition: $80° > \theta > 30°$, and it is more preferable that the inclination angle $\theta$ satisfies the condition: $75° > \theta > 55°$. In this embodiment, the inclination angle is set to about 57°.

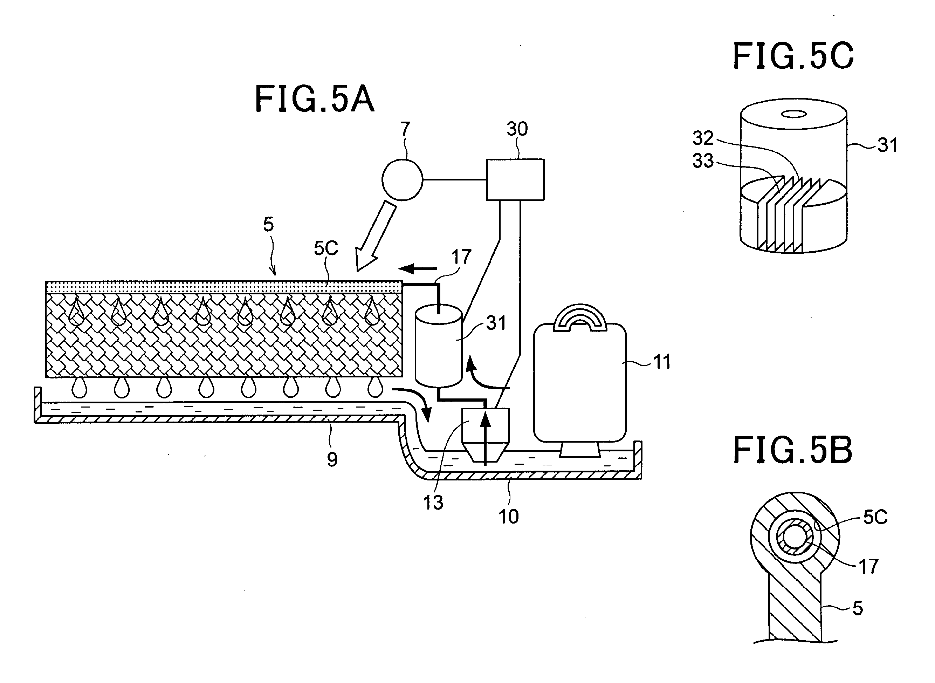

Figs. 5A to 5C show a electrolytic water supply unit for dropping electrolytic water to the gas-liquid contact member 5.

A water receiving tray 9 (see Fig. 3) is disposed below the gas-liquid contact member 5 of PET resin or the like, and a water supplying support tray (support tray) 10 intercommunicates with the water receiving tray 9. A water supply tank 11 for supplying water containing chlorine ions (the water maybe tap water or the like) and a circulating pump 13 are disposed on the support tray 10. In this embodiment, the water supply tank 11 is designed to supplement water (tap water or the like) from the water supply tank 11 into the water supply tank support tray 10 when water in the water supply tank support tray 10 is reduced. When the water in the water supply tank 11 is lost, a user detaches the water supply tank 11 from the water supply tank support tray 10, supplies water (tap water or the like) into the water supply tank 11 and attaches the water supply tank 11 to the water supply tank support tray 10 again.

An electrolytic bath 31 is connected to the circulating pump 13 as shown in Fig. 5A, and an electrolytic water supply pipe 17 is connected to the electrolytic bath 31. The electrolytic water supply pipe 17 is equipped with many water spray holes (not shown) on the outer peripheral portion thereof, and inserted in a water spray box 5C formed at the upper edge portion of the gas-liquid contact member 5 as shown in Fig. 5B. In this embodiment, an electrolytic water dropping unit is constructed to have an electrolytic bath 31 and the electrolytic water supply pipe 17.

As shown in Fig. 5C, the electrolytic bath 31 has three pairs of electrodes 32 and 33, and these electrodes 32, 33 electrolyze the water flowing into the electrolytic bath 31 to generate active oxygen species when current is supplied to these electrodes 32, 33. Here, the active oxygen species means oxygen molecules having higher oxidizing activity than normal oxygen and also related substance thereof, and contain not only so-called narrowly-defined active oxygen such as superoxide anion, singlet oxygen, hydroxyl radical and hydrogen peroxide, but also so-called broadly-defined active oxygen such as ozone, hypochlorous acid, etc.

In this embodiment, the electrolytic bath 31 is disposed between the outlet port of the circulating pump 13 and the inlet port of the gas-liquid contact member 5, preferably in the neighborhood of the inlet port of the gas-liquid contact member 5, and it is designed so that active oxygen species generated by electrolyzing water (tap water or the like) can be immediately supplied to the gas-liquid contact member 5.

The electrodes 32, 33 are electrode plates each of which comprises a base of Ti (titan) and a coated layer of Ir (iridium), Pt (platinum). The current value applied to the electrodes 32, 33 is set so that a predetermined concentration of free residual chlorine (for example, 1 mg/1 liter) is generated when the current density is set to several mA (milliampere) $/cm^2$ to several tens mA/$cm^2$ (for example, 20mA (milliampere) /$cm^2$ (square centimeter)).

When current is supplied to tap water by the electrodes 32, 33, the following reaction occurs at the cathode:

$$4H^+ + 4e^- + (4OH^-) \rightarrow 2H_2 + (4OH^-)$$

Furthermore, the following reaction occurs at the anode:

$$2H_2O \rightarrow 4H^+ + O_2 + 4e^-$$

At the same time, chlorine ions contained water (chlorine ions are added in tap water in advance) reacts as follows:

$$2Cl^- \rightarrow Cl_2 + 2e^-$$

Furthermore, $Cl_2$ thus generated reacts with water as follows:

$$Cl_2 + H_2O \rightarrow HClO + HCl$$

In this construction, by supplying current to the electrodes 32, 33, HClO (hypochlorous acid) having strong sterilizingpower is generated. Therefore, air is passed through the gas-liquid contact member 5 supplied with this hypochlorous acid, thereby preventing breeding of various bacteria in the gas-liquid contact member 5. Accordingly, virus, bacteria, etc. floating on air passing through the gas-liquid contact member 5 can be inactivated. Furthermore, when odor components pass through the gas-liquid contact member 5, the odor components also react with hypochlorous acid in the electrolytic water, and they are ionized and dissolved, whereby the odor components can be removed from air and the air is deodorized.

Next, the operation of this embodiment will be described.

When the operation lid 2D is opened in Fig. 1, an operation panel (not shown) is provided inside the housing. The user operates the operation panel 41 to start the operation of the on-floormount type air filtering apparatus 1. When the operation of the on-floor mount type air filtering apparatus 1 is started, the circulating pump 13 is driven, and water (tap water) stocked in the water supply tank support tray 10 is supplied to the electrolytic bath 31.

In this electrolytic bath 31, the water (tap water) is electrolyzed by supplying current to the electrodes 32, 33 to generate electrolytic water containing active oxygen species. The generated electrolytic water is passed through the water spray holes (not shown) of the electrolytic water supply pipe 17 and sprayed into the water spray box 5C. The sprayed water enters the upper edge portion of the gas-liquid contact member 5 and gradually infiltrates downwardly.

Extra electrolytic water is collected in the water receiving tray 9. The collected electrolytic water flows into the adjacent water supply tank support tray 10, and then is stocked there. This construction is designed as a circulation system in which water is circulated by the circulating pump 13. Accordingly, when the amount of water is reduced due to vaporization or the like, a proper amount of water (tap water) is supplied through the water supply tank 11 to the water supply tank support tray 10. When the amount of water of the water supply tank 11 is reduced, the opening/closing lid 2E (see Fig. 1) is opened, and the water supply tank 11 is detached and supplemented with water (tap water).

As indicated by an arrow X, indoor air is supplied through the air blowing fan into the gas-liquid contact member 5 to which the electrolytic water infiltrates. The indoor air comes into contact with the active oxygen species infiltrated into the gas-liquid contact member 5, and then blown out to the room again. Furthermore, the gas-liquid contact member 5 may be subjected to the hydrophilic treatment to increase the affinity of the gas-liquid contact member 5 to the electrolytic water. In this case, the water retentivity (wettability) of the gas-liquid contact member 5 to the electrolytic water is kept, and the contact between the indoor air and the active oxygen species can be continued for a long time.

For example when influenza virus invades into indoor air, the active oxygen species function to break down and vanish (remove) the surface protein (spike) of the virus concerned which is indispensable for infection. When the surface protein of influenza virus is broken down, the influenza virus is not joined to a receptor which is necessary for infection of the virus concerned, so that infection can be prevented. As a result of a verification test which was made in cooperation with Sanitary Environment Research, it has been found that when air in which influenza virus invades is passed through the gas-liquid contact member 5 of this embodiment, 99% or more of the virus concerned can be removed.

Next, a predicting unit for judging pollution of the electrolytic water and predicting adherence of scale to the gas-liquid contact member 5 will be described. Materials causing occurrence of scale such as calcium, magnesium, etc. exist in tap water, for example, and thus these materials are condensed in electrolytic water achieved by electrolyzing tap water or the like, which enhances the electric conductivity of the electrolytic water.

The predicting unit of this embodiment detects the electric conductivity of electrolytic water in the electrolytic bath 31 by using the electrodes 32, 33 shown in Fig. 5C. When the electric conductivity is larger than a predetermined value, it is judged by a controller 30 described later that scale occurs in the electrolytic water and thus it is condensed on the gas-liquid contact member 5, so that an LED lamp (warning lamp) L (see Fig. 1) which is provided to the operation panel (not shown) and exposed when the operation lid 2D is opened is turned on.

The electrolytic bath 31, the circulating pump 13 and the air blowing fan 7 are also controlled by the controller 30 (see Fig. 5A).

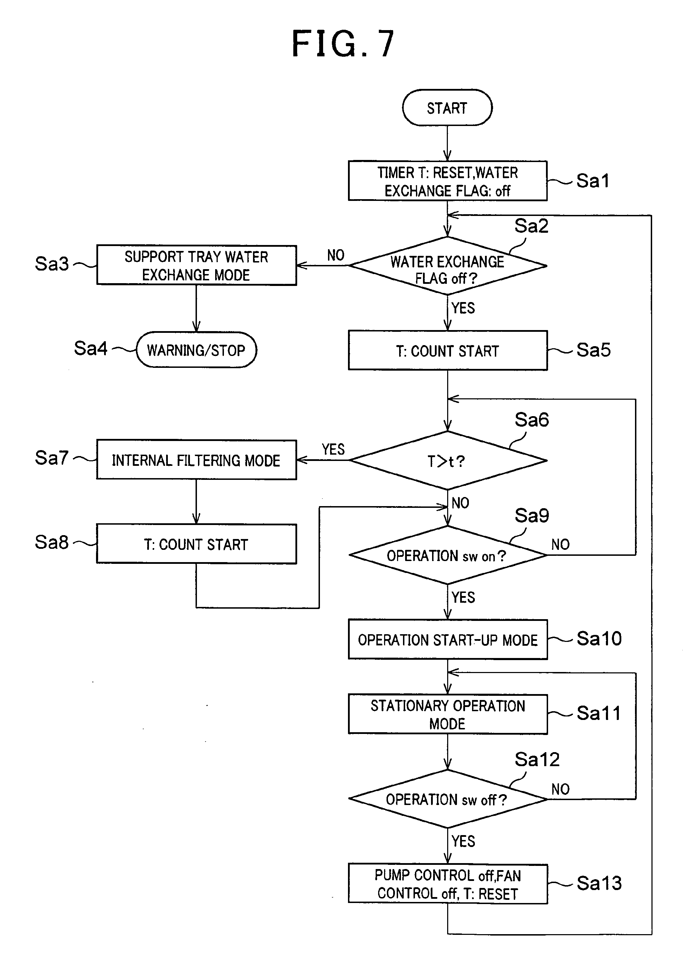

Fig. 7 is a flowchart showing the predicting operation for predicting adherence of scale to the gas-liquid contact member 5 by the controller 30.

First, when a power supply is connected to the apparatus, a counter count T which has counted since the stop of the previous operation is reset, and also a water exchange flag is set to off (step Sa1). This water exchange flag is used to judge whether the present operation mode should be shifted to a support tray water exchange mode in which electrolytic water or tap water stocked in the water supply tank support tray 10 is exchanged by new one.

Subsequently, in order to judge whether the present operation mode should be shifted to the support tray water exchange mode, it is judged whether the water exchange flag is set to off (step Sa2). Here, if it is judged that the water exchange flag is not set to off (step Sa2: no), the operation mode is shifted to the support tray water exchange mode described later.

On the other hand, if it is judged that the water exchange flag is set to off (step Sa2: yes), the count of the timer T is started (step Sa5), and then it is judged whether the timer count T exceeds a predetermined time at which the air filtering performance of electrolytic water is estimated to be lowered (step Sa6). Here, the term of "air filtering" is broadly defined in this specification, and for example it contains the meaning of sterilization, inactivation, sterile filtration, removal, etc. of microorganisms such as virus, bacteria, fungus, etc. from air. If it is judged that the timer count T exceeds the predetermined time t (step Sa6: yes), the operation mode is shifted to an internal sterilization mode for filtering the electrolytic water (step Sa7).

Here, the internal filtering mode is an operation mode in which when the state that electrolysis is stopped is continued for a long time, water is electrolyzed to generate hypochlorous acid to prevent breeding of bacterial, etc. and also prevent deterioration of water quality. The deterioration of water quality would occur when hypochlorous acid in the electrolytic water in the apparatus is consumed and thus the filtering performance is lowered. In the internal filtering mode, the water in the apparatus is electrolyzed to generate hypochlorous acid every time the predetermined time t elapses.

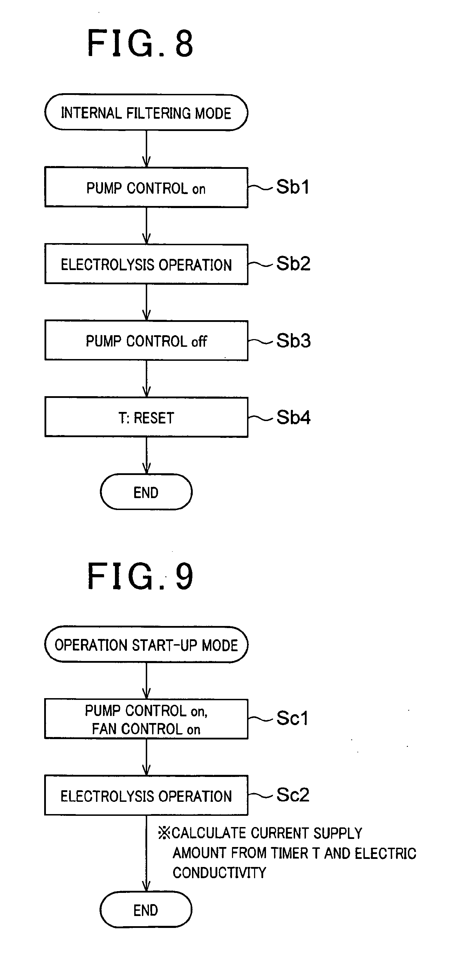

Fig. 8 is a flowchart showing the operation in the internal filtering mode.

First, when the operation mode is shifted to the internal filtering mode, the circulating pump 13 is controlled to be turned on, and the operation of the circulating pump 13 is started (step Sb1), so that an electrolysis operation described later is started (step Sb2).

When the electrolysis operation is finished, the circulating pup 13 is controlled to be turned off, and thus the operation of the circulating pump 13 is finished (step Sb3). Furthermore, the count value of the timer count T is reset (step Sb4), and the internal filtering mode is finished. Then, the count operation of the timer count T is started (step Sa8).

On the other hand, if it is judged in step Sa6 whether the operation stop time T does not exceed a predetermined time t (step Sa6: no) or if the internal filtering mode (step Sa7) is finished and the count of the timer count T is started (Sa8), the processing waits for an operation instruction which will be made by user's manipulation of a operation switch (SW) on the operation panel (step Sa9).

When the operation of the floor-mount type air filtering apparatus 1 is started upon user's operation of the operation switch, the operation mode is shifted to the operation start-up mode for supplementing hypochlorous acid whose residual concentration is lowered during the operation stop period T from the time when the previous operation is stopped or the internal filtering mode is finished till the time when the present operation is started, and also carrying out the prediction operation of predicting adherence of scale (step Sa10) .

Fig. 9 is a flowchart showing the operation processing of the controller 30 in the operation start-up mode.

First, the circulating pump 13 and the air blowing fan 7 are driven, and electrolytic water or water (tap water, for example) (hereinafter collectively referred to as electrolytic water) stocked in the water supply tank support tray 10 is supplied to the electrolytic bath 31 (step Scl).

Subsequently, the operation is shifted to the electrolysis operation and the following processing is executed.

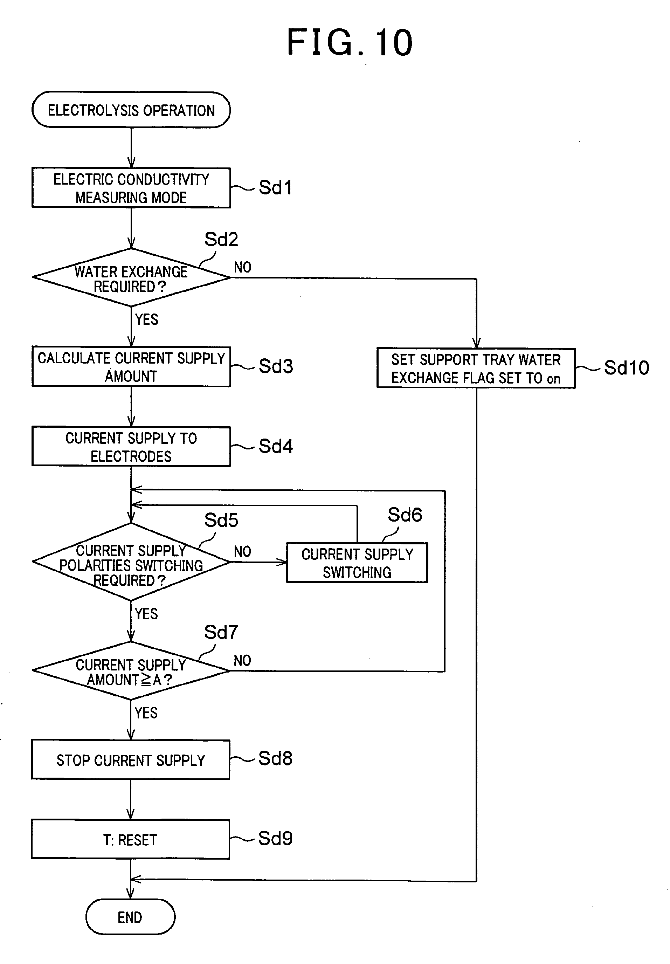

Fig. 10 is a flowchart showing the operation processing of the controller 30 under the electrolysis operation.

When the operation is shifted to the electrolysis operation, the operation mode is first shifted to an electric conductivity for measuring the electric conductivity of the electrolytic water, and the electric conductivity of the electrolytic water in the electrolytic bath 31 is detected by using the electrodes 32, 33 (Fig. 5) (step Sd1).

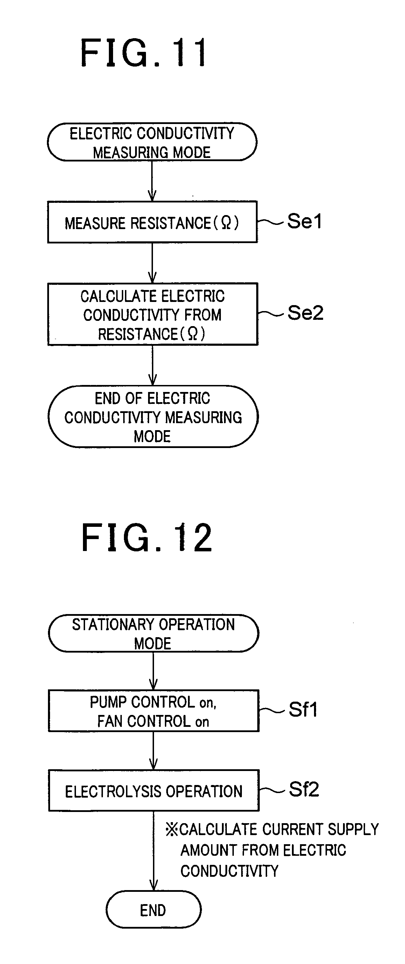

The electric conductivity mode (step Sd1) will be described in detail with reference to the flowchart of Fig. 11. First, an AC voltage is applied between the electrodes 32 and 33 of the electrolytic bath 31 to measure the AC resistance value ($\Omega$) of the electrolytic water interposed between the electrodes 32 and 33 (step Se1). Subsequently, the electric conductivity of the electrolytic water is calculated from the measured AC resistance value ($\Omega$) (step Se2), and then the electric conductivity measuring mode is finished.

In this embodiment, the value of the electric conductivity of electrolytic water at which the electrolytic water is at the brink of adherence of scale is set to a threshold value $\alpha$, and the threshold value $\alpha$ is determined by experiments or the like in advance. That is, the adherence of scale is judged by using the threshold value α, and thus it can be easily known whether the scale is at the brink of adherence to the gas-liquid contact member 5.

When the electric conductivity is detected in the electric conductivity measuring mode, the pollution of electrolytic water is measured in accordance with whether the detected electric conductivity is larger than the threshold value α or not, whereby it can be judged whether water exchange is necessary or not (step Sd2).

As a measurement result of the electric conductivity of the step Sd1, if it is judged that the electric conductivity is larger than the threshold value α and thus water exchange is necessary (step Sd2:no), it is predicted that if the electrolytic water is left as it is, the electrolytic water is further polluted and thus scale adheres to the gas-liquid contact member 5. Therefore, in order to prevent adherence of scale, the support tray water exchange flag is set to on so that the operation mode is shifted to the support tray water exchange mode in step Sa2 (Fig. 7) (step Sd10) .

On the other hand, as a measurement of the electric conductivity of the step Sd1, if it is judged that the electric conductivity is not larger than the threshold value α and thus water exchange is unnecessary (step Sd2:yes), it is estimated that the electrolytic water does not fall into the state that scale adheres to the gas-liquid contact member 5.

In order to set the concentration of hypochlorous acid contained in electrolytic water to a desired target concentration (required concentration) at which virus floating on the air passing through the gas-liquid contact member 5 canbe inactivated, the electrolysis current and the electrolysis time that provides the target concentration are calculated from the residual concentration of hypochlorous acid and the electric conductivity of the electrolytic water, and the electrolysis condition based on the calculation result concerned is determined, and the electrolytic water must be electrolyzed under the electrolysis condition concerned. At this time, the electrolysis time is calculated on the basis of the stop time (timer count T) from the previous electrolysis stop (step Sa7 or step Sa13) and the data which are achieved from the measured electric conductivity by experiments or the like in advance (step Sd3).

Here, if the residual concentration of hypochlorous acid after the previous operation of the floor-mount type air filtering apparatus 1 is stopped is high, it would be considered that an excessively large amount of hypochlorous acid is generated at the restart time of the operation. The residual concentration of hypochlorous acid is lowered as the time elapses. Therefore, if the operation stop time (timer count T) is shorter, the residual concentration is higher, and if the operation stop time (timer count T) is longer, the residual concentration is lower. Therefore, the residual amount of hypochlorous acid (the active oxygen species concentration) of the electrolytic water can be estimated on the basis of the operation stop time (timer count T) from the stop of the operation. Accordingly, in the operation start-up mode, the electrolysis current and the electrolysis time which correspond to the timer count T and the electric conductivity are calculated so that electrolysis can be performed so as not to generate an excessively amount of hypochlorous acid.

When the electrolysis condition is set on the basis of the electrolysis current and the electrolysis time calculated in step Sd3, current supply to the electrodes 32, 33 is started under the electrolysis condition thus set, and the current based on the set electrolysis condition flows between the electrodes 32 and 33 (step Sd4), so that hypochlorous acid whose amount corresponds to the current is generated.

The electrolysis is continued until the current supply amount based on the actual electrolysis reaches the current supply amount (electrolysis current x electrolysis time) A set in the step Sd3, whereby a required concentration of hypochlorous acid is generated (step Sd7). If it is judged I step Sd7 that the current supply amount based on the actual electrolysis reaches the calculated current supply amount A, the current supply to the electrodes 32 and 33 is stopped (step Sd8), and the timer count T is reset (step Sd9), thereby finishing the electrolysis operation.

Tap water contains calcium, magnesium, etc. Accordingly, when tap water is electrolyzed, these components deposit as scale on an electrode (cathode), and the electric conductivity is lowered, so that it is difficult to carry out continual electrolysis.

In this case, it is effective to invert the polarities of the electrodes (the plus and minus polarities of the electrodes are switched to each other). That is, the cathode electrode is electrolyzed as an anode electrode, whereby the scale depositing on the cathode electrode can be removed. This switching control can be periodically performed by integrating the current supply time of the electrolysis with a timer.

In this embodiment, this switching control is carried out during the current supply operation to the electrodes 32 and 33 (step Sd4 to step Sd7), and by judging whether the integrated current supply time exceeds the current supply time based on the set electrolysis condition, it is judged whether the current supply polarity switching operation is necessary or not (step Sd5). At this time, if it is judged that the current supply polarity switching operation is necessary (step Sd5 : no), the current supply switching operation is carried out (step Sd6), and the current supply to the electrodes 32 and 33 is carried out until the current supply amount based on the actual electrolysis reaches the calculated current supply amount A.

When the electrolysis operation is finished, the operation start-up mode is finished (Fig. 9), and the operation mode is shifted to the stationary operation mode containing the predicting operation for predicting adherence of scale when the floor-mount type air filtering apparatus is under stationary operation as shown in the flowchart of Fig. 7 (step Sa11).

Fig. 12 is a flowchart showing the processing of the controller 30 in the stationary operation mode.

When the operation mode is shifted to the stationary operation mode, the circulating pump 13 and the air blowing fan 7 are first driven, and electrolytic water stocked in the supply water tank support tray 10 is supplied to the electrolytic bath 31 (step Sf1). Subsequently, pollution of the electrolytic water is judged, the operation is shifted to the electrolysis operation (Fig. 10) for predicting adherence of scale to the gas-liquid contact member 5, and the above-described electrolysis operation processing is executed. Here, in the electrolysis operation processing in the operation start-up mode, the electrolysis condition is calculated on the basis of the value of the timer count T and the electric conductivity when the current supply amount is calculated in step Sd3 (Fig. 10). However, in the stationary operation mode, hypochlorous acid whose amount is reduced is supplemented while the operation of the floor-mount type air filtering apparatus 1 is carried out, and thus the electrolysis condition is calculated on the basis of only the electric conductivity.

The stationary operation mode is repetitively executed until an operation stop instruction is made by the operation of the operation switch (SW) (step Sa12).

At this time, when the operation of the floor-mount type air filtering apparatus 1 is stopped by user's operation of the operation switch (step Sa12:yes), the operation of the circulating pump 13 and the air blowing fan 7 is stopped, and the timer count T is reset (step Sa13).

The processing returns to the judgment as to whether the water exchange flag is set to off or not (step Sa2), and the processing is executed from the step Sa2 again. Here, when it is judged in step Sa2 that the water exchange flag is set to on (step Sa2: no) because the support tray water exchange flag is set to on in step Sd10 (Fig. 10), the operation mode is shifted to the support tray water exchange mode (step Sa3).

In the support tray water exchange mode, a display indicating pollution of water (promoting water exchange) is made by turning on the LED lamp (warning means) provided to the operation panel in order to inform (warn) exchange of electrolytic water stocked in the water supply tank support tray 10 to the user. When the exchange of the electrolytic water is warned, the operation of the electrolytic bath 31, the air blowing fan 7 and the circulating pump 13 is stopped (step Sa4).

At this time, the user draws out the water supply tank support tray 10, for example, and the electrolytic water stocked in the water supply tank support tray 10 is discarded and exchanged by new one. Then, when the operation panel is operated to start the operation of the floor-mount type air filtering apparatus 1, the processing is started from the step Sa1. Immediately after the electrolytic water is exchanged, the electric water is not polluted, and thus the water exchange judgment of the step Sd2 (Fig. 10) indicates that the measured electric conductivity does not exceed the threshold value $\alpha$, and thus it is judged that water exchange is unnecessary (step Sd2: Yes).

As described above, according to this embodiment, pollution of electrolytic water is judged, and adherence of scale to the gas-liquid contact member 5 is predicted. Therefore, adherence of scale contained in electrolytic water to the gas-liquid contact member 5 can be predicted before the scale actually adheres to the gas-liquid contact member 5. That is, the adherence of scale to the gas-liquid contact member 5 canbe prevented fromoccurring.

The present invention is not limited to the above-described embodiment, and various modifications may be made.

For example, the air filtering apparatus of the present invention may be designed so that ozone ($O_3$) or hydrogen peroxide ($H_2O_2$) is generated as the active oxygen species. In this case, when platinum tantalum electrodes are used as the electrodes, active oxygen species can be highly efficiently and stably generated from water in which ion species are rare.

At this time, at the anode, the following reaction occurs:

$$2H_2O \rightarrow 4H^+ + O_2 + 4e^-$$

Simultaneously with the above reaction, the following reactions occur, and ozone ($O_3$) is generated.

$$3H_2O \rightarrow O_3 + 6H^+ + 6e^-$$

$$2H_2O \rightarrow O_3 + 4H^+ + 4e^-$$

Furthermore, at the cathode, the following reactions occur:

$$4H^+ + 4e^- + (4OH^-) \rightarrow 2H_2 + (4OH^-)$$

$$O_2^- + e^- + 2H^+ \rightarrow H_2O_2$$

That is, $O_2^-$ generated through the electrode reaction and $H^+$ in solution are bonded to each other to generate hydrogen peroxide ($H_2O_2$).

In this construction, ozone ($O_3$) and hydrogen peroxide ($H_2O_2$) which have strong sterilizing power are generated by supplying current to the electrodes, and electrolytic water containing ozone ($O_3$) and hydrogen peroxide ($H_2O_2$) can be created. The concentration of ozone or hydrogen peroxide in the electrolytic water is adjusted to a value suitable for inactivate target virus or the like and air is passed through the gas-liquid contact member 5 supplied with the electrolytic water having this concentration, whereby target virus, etc. floating in the air can be inactivated. Furthermore, even odor reacts with ozone or hydrogen peroxide in the electrolytic water when passing through the gas-liquid contact member 5, and ionized and dissolved in the electrolytic water, whereby the odor components are removed from the air and thus the air is deodorized.

In the above embodiment, the polarities of the electrodes are inverted periodically by using the timer. However, the present invention is not limited to this style. For example, the polarities of the electrodes may be inverted irregularly, for example, every time the operation of the apparatus is started or the like. Furthermore, increase of the electrolysis resistance (reduction in electrolysis current or increase in electrolysis voltage) is detected, and the polarities of the electrodes may be inverted on the basis of the detection result.

Furthermore, in the above embodiment, the electric conductivity of electrolytic water in the electrolysis bath 31 is detected by using the electrodes 32 and 33 under the state that the electrodes 32, 33 of the electrolysis bath 31 do not carry out the electrolysis. However, new electrodes other than the electrodes 32 and 33 of the electrolytic bath 31 maybe provided so that the electric conductivity of the electrolytic water is detected by these new electrodes. In this case, it is preferable that the new electrodes are provided in the water supply tank support tray 10.

In the above embodiment, pollution of electrolytic water is judged by detecting the electric conductivity of the electrolytic water. However, the transmittance of electrolytic water may be detected by an optical sensor or the specific gravity of electrolytic water may be detected insofar as the pollution of electrolytic water can be judged.

In the above embodiment, the water exchange timing is informed by turning on the LED lamp (warning means) provided to the operation panel, however, it may be informed by using another type of lamp or emitting sound such as a melody or the like.

The above embodiment adopts the water supply system based on the water supply tank 11 which can be freely put in and out. However, the present invention may adopt a water pipe water supply system in which a tap water pipe is connected to the apparatus in place of the water supply tank 11 and city water (tap water) is introduced.

Furthermore, in the above embodiment, the electrolytic water dropping mechanism for dropping electrolytic water to the gas-liquid contact member 5 is used. However, the present invention is not limited to the above style, and for example, electrolyticwatermaybe infiltrated into the gas-liquid contact member 5. In this case, electrolytic water is stocked in the water support tray 9 so that the lower edge portion of the gas-liquid contactmember 5 is immersed in the electrolytic water, and the electrolytic water is sucked up by so-called capillary phenomenon.

In the above embodiment, the operation mode is shifted to the support tray water exchange mode under the state that the operation switch is set to off, however, the present invention is not limited to this style. For example, even under the state that the operation switch is set to on, the operation of the floor-mount type air filtering apparatus 1 may be temporarily stopped, and the operation mode may be shifted to the support tray water exchange mode.

## Claims

1. A air filtering apparatus for filtering microorganisms such as virus, bacteria, fungus, etc. contained in air, **characterized by** comprising:

   a mechanism for blowing air to a gas-liquid contact member (5) to or into which electrolytic water achieved by electrolyzing water containing chlorine ions is dropped or infiltrated so that the air is brought into contact with the electrolytic water, and blowing out the filtered air to a room; and
   a predicting unit (32, 33, 30) for judging pollution of the electrolytic water and predicting adherence of scale to the gas-liquid contact member (5).

2. The air filtering apparatus according to claim 1, wherein the predicting unit includes an electronic conductivity detecting unit (32, 33) for detecting the electric conductivity of the electrolytic water, and judges the pollution of the electrolytic water on the basis of the electric conductivity detected by the electric conductivity detecting unit.

3. The air filtering apparatus according to claim 2, wherein the electric conductivity detecting unit includes electrodes (32, 33) for electrolyzing water to generate the electrolytic water, the electric conductivity of the electrolytic water being detected by the electrodes.

4. The air filtering apparatus according to any one of claims 1 to 3, further comprising a warning unit (L) for warning adherence of scale when the predicting unit predicts adherence of scale.

5. The air filtering apparatus according to any one of claims 1 to 4, wherein the electrolytic water contains active oxygen specifies achieved by electrolyzing tap water, and the active oxygen species contain at least one material selected from the group consisting of hypochlorous acid, ozone and hydrogen peroxide.

6. The air filtering apparatus according to any one of claims 3, wherein the polarities of the electrodes are inverted periodically or irregularly under a predetermined condition.

7. An air filtering apparatus for filtering microorganisms such as virus, bacteria, fungus, etc. contained in air, **characterized by** comprising:

   a mechanism for blowing air to a gas-liquid contact member (5) to or into which electrolytic water achieved by electrolyzing water containing chlorine ions is dropped or infiltrated so that the air is brought into contact with the electrolytic water, and blowing out the filtered air to a room; and
   an electronic conductivity detecting unit (32, 33) for detecting the electric conductivity of the electrolytic water, wherein a condition for electrolyzing electrolytic water and achieving electrolytic water having a required concentration is determined on the basis of the electric conductivity detected by the electric conductivity detecting unit, and the electrolytic water is electrolyzed under the condition.

8. An air filtering apparatus for filtering microorganisms such as virus, bacteria, fungus, etc. contained in air, **characterized by** comprising a mechanism for blowing air to a gas-liquid contact member (5) to or into which electrolytic water achieved by electrolyzing water containing chlorine ions is dropped or infiltrated so that the air is brought into contact with the electrolytic water, and blowing out the filtered indoor air to a room, wherein the mechanism has an internal filtering mode in which when the stop time of the electrolysis is longer than a predetermined time, the electrolysis of the electrolytic water is started to prevent deterioration of water quality.

9. The air filtering apparatus according to claim 8, wherein the mechanism has an operation start-up mode in which when the operation based on the internal filtering mode is executed and then an operation switch for the apparatus is turned on, prior to a stationary operation, electrolysis is executed to supplement active oxygen specifies whose residual concentration is lowered during the stop time, in accordance with the electric conductivity of the electrolytic water and the stop time of the electrolysis.

10. An air filtering apparatus for filtering microorganisms such as virus, bacteria, fungus, etc. contained in air, **characterized by** comprising:

    a mechanism for blowing air to a gas-liquid contact member to or into which electrolytic water achieved by electrolyzing water containing chlorine ions is dropped or infiltrated so that the air is brought into contact with the electrolytic water, and blowing out the filtered indoor air to a room; and
    an electronic conductivity detecting unit for detecting the electric conductivity of the electrolytic water, wherein when an operation switch for the apparatus is turned on, prior to a stationary operation, electrolysis is executed to supplement active oxygen specifies whose residual concentration is lowered during the stop time, in accordance with the electric conductivity of the electrolytic water and the stop time of the electrolysis.

# FIG.1

# FIG.2

# FIG.3

# FIG.4

# FIG.5A

# FIG.5C

# FIG.5B

EP 1 798 493 A2

# FIG.6

EP 1 798 493 A2

# FIG. 7

START

TIMER T: RESET,WATER
EXCHANGE FLAG: off — Sa1

Sa2

Sa3 — SUPPORT TRAY WATER
EXCHANGE MODE ← NO ← WATER EXCHANGE
FLAG off?

YES

Sa4 — WARNING/STOP

T: COUNT START — Sa5

Sa6

Sa7 — INTERNAL FILTERING MODE ← YES ← T>t?

NO

Sa9

Sa8 — T: COUNT START

OPERATION sw on? — NO

YES

OPERATION START-UP MODE — Sa10

STATIONARY OPERATION
MODE — Sa11

Sa12

OPERATION sw off? — NO

YES

PUMP CONTROL off,FAN
CONTROL off, T: RESET — Sa13

# FIG. 8

```
┌─────────────────────────────┐
│   INTERNAL FILTERING MODE   │
└─────────────────────────────┘
              │
              ▼
┌─────────────────────────────┐
│        PUMP CONTROL on       │ ～Sb1
└─────────────────────────────┘
              │
              ▼
┌─────────────────────────────┐
│     ELECTROLYSIS OPERATION   │ ～Sb2
└─────────────────────────────┘
              │
              ▼
┌─────────────────────────────┐
│       PUMP CONTROL off       │ ～Sb3
└─────────────────────────────┘
              │
              ▼
┌─────────────────────────────┐
│          T: RESET            │ ～Sb4
└─────────────────────────────┘
              │
              ▼
         ┌─────────┐
         │   END   │
         └─────────┘
```

# FIG. 9

```
┌─────────────────────────────┐
│     OPERATION START-UP MODE  │
└─────────────────────────────┘
              │
              ▼
┌─────────────────────────────┐
│      PUMP CONTROL on,        │ ～Sc1
│      FAN CONTROL on          │
└─────────────────────────────┘
              │
              ▼
┌─────────────────────────────┐
│     ELECTROLYSIS OPERATION   │ ～Sc2
└─────────────────────────────┘
              │
              │  ※CALCULATE CURRENT SUPPLY
              │    AMOUNT FROM TIMER T AND ELECTRIC
              │    CONDUCTIVITY
              ▼
         ┌─────────┐
         │   END   │
         └─────────┘
```

# FIG. 10

```
         ( ELECTROLYSIS OPERATION )
                     │
                     ▼
         ┌─────────────────────┐
         │ ELECTRIC CONDUCTIVITY│ ～Sd1
         │   MEASURING MODE     │
         └─────────────────────┘
                     │
                     ▼          Sd2
              ◇─────────────◇      NO
              │WATER EXCHANGE├──────────────────────┐
              │  REQUIRED ?  │                       │
              ◇─────────────◇                        │
                     │ YES                           │
                     ▼                               ▼
         ┌─────────────────────┐        ┌─────────────────────┐
         │ CALCULATE CURRENT   │ ～Sd3   │ SET SUPPORT TRAY WATER│ ～Sd10
         │   SUPPLY AMOUNT     │        │ EXCHANGE FLAG SET TO on│
         └─────────────────────┘        └─────────────────────┘
                     │                               │
                     ▼                               │
         ┌─────────────────────┐                     │
         │ CURRENT SUPPLY TO   │ ～Sd4               │
         │    ELECTRODES       │                     │
         └─────────────────────┘                     │
                     │ ◄─────────────────┐           │
                     ▼   Sd5             │  Sd6      │
              ◇─────────────◇  NO  ┌────────────┐    │
              │CURRENT SUPPLY├─────►│CURRENT SUPPLY│  │
              │POLARITIES    │      │  SWITCHING  │   │
              │SWITCHING     │      └────────────┘    │
              │REQUIRED ?    │                        │
              ◇─────────────◇                         │
                     │ YES                            │
                     ▼   Sd7                          │
              ◇─────────────◇  NO                     │
              │CURRENT SUPPLY├─────────────────────┐  │
              │ AMOUNT ≧ A ? │                      │  │
              ◇─────────────◇                       │  │
                     │ YES                          │  │
                     ▼                              │  │
         ┌─────────────────────┐                   │  │
         │ STOP CURRENT SUPPLY │ ～Sd8             │  │
         └─────────────────────┘                   │  │
                     │                             │  │
                     ▼                             │  │
         ┌─────────────────────┐                   │  │
         │      T: RESET       │ ～Sd9             │  │
         └─────────────────────┘                   │  │
                     │ ◄───────────────────────────┘  │
                     ▼ ◄──────────────────────────────┘
               (  END  )
```

# FIG. 11

```
┌─────────────────────────────┐
│   ELECTRIC CONDUCTIVITY      │
│      MEASURING MODE          │
└─────────────────────────────┘
              │
              ▼
┌─────────────────────────────┐
│   MEASURE RESISTANCE(Ω)      │ ─── Se1
└─────────────────────────────┘
              │
              ▼
┌─────────────────────────────┐
│     CALCULATE ELECTRIC       │
│    CONDUCTIVITY FROM         │ ─── Se2
│      RESISTANCE(Ω)           │
└─────────────────────────────┘
              │
              ▼
┌─────────────────────────────┐
│    END OF ELECTRIC           │
│  CONDUCTIVITY MEASURING      │
│         MODE                 │
└─────────────────────────────┘
```

# FIG. 12

```
┌─────────────────────────────┐
│   STATIONARY OPERATION       │
│         MODE                 │
└─────────────────────────────┘
              │
              ▼
┌─────────────────────────────┐
│     PUMP CONTROL on,         │ ─── Sf1
│     FAN CONTROL on           │
└─────────────────────────────┘
              │
              ▼
┌─────────────────────────────┐
│   ELECTROLYSIS OPERATION     │ ─── Sf2
└─────────────────────────────┘
              │
              │  ※CALCULATE CURRENT SUPPLY
              │    AMOUNT FROM ELECTRIC
              │    CONDUCTIVITY
              ▼
┌─────────────────────────────┐
│           END               │
└─────────────────────────────┘
```

**EP 1 798 493 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002181358 A